(19) Europäisches Patentamt / European Patent Office / Office européen des brevets

(11) **EP 3 401 121 B1**

## (12) EUROPEAN PATENT SPECIFICATION

(45) Date of publication and mention
of the grant of the patent:
**11.03.2020 Bulletin 2020/11**

(51) Int Cl.:
**B60C 1/00** *(2006.01)*      **C08L 7/00** *(2006.01)*

(21) Application number: **18169743.4**

(22) Date of filing: **27.04.2018**

(54) **TIRE TREAD AND TIRE**

REIFENLAUFFLÄCHE UND REIFEN

BANDE DE ROULEMENT ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.05.2017 JP 2017093088**

(43) Date of publication of application:
**14.11.2018 Bulletin 2018/46**

(73) Proprietor: **Sumitomo Rubber Industries, Ltd.
Kobe-shi, Hyogo 651-0072 (JP)**

(72) Inventor: **MAEKAWA, Tetsuya
Kobe-shi,, Hyogo 651-0072 (JP)**

(74) Representative: **TBK
Bavariaring 4-6
80336 München (DE)**

(56) References cited:
**EP-A1- 1 505 113      EP-A1- 2 366 558
EP-A1- 2 377 892**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a tire tread formed from a predetermined rubber composition and a tire including the tire tread.

Description of the Background Art

Regarding tires serving for vehicle transportation, low fuel consumption performance (low heat generation property) has been becoming an important characteristic for the reasons such as steep rise in fuel cost and increase in expenses due to introduction of environmental regulations. Furthermore, tires have also been required to have durability. In particular, damage such as chip-cut occurs in a tread rubber, and thus the tread rubber needs to ensure durability against chip-cut (chip-cut resistance). Therefore, natural rubber which exhibits a low heat generation property and high rubber strength is often used for the tread rubber.

In addition, abrasion resistance is also required as durability. For this purpose, for example, a butadiene rubber is blended to improve the abrasion resistance. However, when the butadiene rubber is blended, the abrasion resistance tends to improve, but chip-cut resistance deteriorates. Thus, it is difficult to achieve both desired abrasion resistance and desired chip-cut resistance.

For example, as a method for improving low fuel consumption performance, Japanese Laid-Open Patent Publication No. 2000-344955 proposes a method in which a diene rubber (modified rubber) modified with an organic silicon compound containing an amino group and an alkoxy group is used, but achievement of both desired abrasion resistance and desired chip-cut resistance is not considered therein.

SUMMARY OF THE INVENTION

An object of the present invention is to provide a tire tread formed from a rubber composition having good abrasion resistance and chip-cut resistance, and a tire including the tire tread.

As a result of a thorough study, the present inventor has found that the above problem can be solved by using predetermined carbon black and a predetermined vulcanizing agent in a rubber component containing a modified natural rubber and a styrene-butadiene rubber, and has further studied to complete the present invention.

Specifically, the present invention is directed to:

[1] a tire tread formed from a rubber composition containing

100 parts by mass of a rubber component containing 40 to 75% by mass, preferably 45 to 75% by mass, more preferably 50 to 75% by mass, and further preferably 55 to 75% by mass of a modified natural rubber having a nitrogen content of not greater than 0.40% by mass, preferably not greater than 0.30% by mass, more preferably not greater than 0.20% by mass, and further preferably not greater than 0.10% by mass, and 10 to 35% by mass and preferably 10 to 30% by mass of a styrene-butadiene rubber,
20 to 60 parts by mass and preferably 25 to 55 parts by mass of carbon black having a cetyltrimethylammonium bromide adsorption specific surface area (CTAB) of not less than 120 $m^2$/g, preferably 120 to 165 $m^2$/g, more preferably 125 to 165 $m^2$/g, and further preferably 130 to 165 $m^2$/g, and
0.5 to 3.0 parts by mass, preferably, 0.7 to 2.5 parts by mass, and more preferably 1.0 to 2.0 parts by mass of a compound represented by the following formula (A),

$$R^1\text{-S-S-Y-S-S-}R^2 \qquad (A),$$

wherein Y represents an alkylene group having 2 to 10 carbon atoms and preferably 4 to 8 carbon atoms, $R^1$ and $R^2$ are the same or different from each other and each represent a monovalent organic group containing a nitrogen atom;

[2] the tire tread according to the above [1], wherein the rubber composition further contains not greater than 2.0 parts by mass, preferably greater than 0 and not greater than 2.0 parts by mass, more preferably 0.1 to 1.5parts by mass, and further preferably 0.2 to 1.0 parts by mass of sulfur;

[3] the tire tread according to the above [1] or [2], wherein the rubber component further contains greater than 0% by mass and not greater than 45% by mass, preferably 3 to 45% by mass, more preferably 5 to 45% by mass, further preferably 5 to 40% by mass, even further preferably 5 to 35% by mass, and much further preferably 5 to 30% by mass of a butadiene rubber;

[4] the tire tread according to any one of the above [1] to [3], wherein the rubber composition further contains silica;

[5] the tire tread according to the above [4], wherein the rubber composition further contains a silane coupling agent;

[6] the tire tread according to any one of the above [1] to [5], wherein the modified natural rubber is obtained by subjecting a natural rubber to saponification treatment; and

[7] a tire including the tire tread according to any one of the above [1] to [6].

The tire tread and the tire including the tire tread according to the present invention have good abrasion resistance and chip-cut resistance. In addition, the tire tread and the tire including the tire tread according to the present invention also have good low fuel consumption performance (low heat generation property).

DESCRIPTION OF THE PREFERRED EMBODIMENTS

A predetermined tire tread that is an embodiment of the present invention is characterized by being a tire tread formed from a rubber composition containing: 100 parts by mass of a rubber component containing 40 to 75% by mass of a modified natural rubber having a nitrogen content of not greater than 0.40% by mass and 10 to 35% by mass of a styrene-butadiene rubber; 20 to 60 parts by mass of carbon black having a cetyltrimethylammonium bromide adsorption specific surface area (CTAB) of not less than 120 $m^2/g$; and 0.5 to 3 parts by mass of a compound represented by the above formula (A).

Although not intended to be bound by a theory, in the present invention, the mechanism for achieving synergetic improvement of abrasion resistance and chip-cut resistance is considered as follows. Specifically, in the present invention, a styrene-butadiene rubber (SBR) having higher stiffness than a natural rubber (NR) is scattered as an island phase and thus achieves an effect of inhibiting growth of cracks that occur due to abrasion or chipping. Meanwhile, cracks easily occur at an interface. Thus, by removing impurities from the NR and using predetermined carbon black and a predetermined organic vulcanizing agent, poor dispersion of the carbon black is prevented, and polymers are more firmly crosslinked than by normal sulfur crosslink, thereby inhibiting occurrence of cracks. By these effects, synergetic improvement of abrasion resistance and chip-cut resistance is considered to be achieved.

<Rubber Component>

The rubber component contains a predetermined modified natural rubber and a predetermined styrene-butadiene rubber.

(Modified Natural Rubber)

The modified natural rubber is a natural rubber obtained by reducing or eliminating components other than a natural polyisoprenoid component contained in a natural rubber latex, mainly protein (preferably, a natural rubber obtained by removing also impurities such as phospholipid and gel component). The natural rubber particles contained in the natural rubber latex have a structure in which an isoprenoid component is coated with impurity components. By removing the impurities on the surfaces of the natural rubber particles, the structure of the isoprenoid component is changed, and interaction with a blending ingredient is also changed. Thus, effects such as a reduction in energy loss and improvement of durability are inferred to be achieved. In addition, by removing the impurities in the natural rubber latex, the odor peculiar to the natural rubber can be reduced.

As modification treatments, known methods such as saponification treatment, enzyme treatment, and mechanical treatment including ultrasonic treatment and centrifugal separation are used without limitation. Among them, saponification treatment is preferable from the standpoint of production efficiency, cost, and the dispersibility of a white filler.

Examples of the natural rubber latex include a raw latex (field latex) collected by tapping Hevea trees, a concentrated latex (refined latex) obtained by condensing the raw latex by a centrifugal separation method or a creaming method, a high ammonia latex obtained by adding ammonia by an ordinary method, and a LATZ latex stabilized with zinc oxide, TMTD (tetramethylthiuram disulfide), and ammonia. Among them, for the reason that modification by pH control is easy, a field latex is preferably used.

From the standpoint of agitation efficiency, a rubber component (solid rubber component) in the natural rubber latex is preferably 5 to 40% by mass and more preferably 10 to 30% by mass.

Examples of the method for the saponification treatment include methods disclosed in Japanese Laid-Open Patent Publication No. 2010-138359 and Japanese Laid-Open Patent Publication No. 2010-174169. Specifically, the saponification treatment can be carried out by adding a basic compound and a surfactant as necessary to the natural rubber latex and allowing the natural rubber latex to stand at a predetermined temperature for a certain time, and agitation may be performed as necessary.

The basic compound is not particularly limited, but is suitably an inorganic basic compound from the standpoint of performance of removal of protein. Examples of the inorganic basic compound include: metal hydroxides such as alkali metal hydroxides and alkali earth metal hydroxides; metal carbonates such as alkali metal carbonates and alkali earth metal carbonates; metal hydrogencarbonates such as alkali metal hydrogencarbonates; metal phosphates such as alkali metal phosphates; metal acetates such as alkali metal acetates; metal hydrides such as alkali metal hydrides; and ammonia.

Examples of alkali metal hydroxides include lithium hydroxide, sodium hydroxide, and potassium hydroxide. Examples of alkali earth metal hydroxides include magnesium hydroxide, calcium hydroxide, and barium hydroxide. Examples of alkali metal carbonates include lithium carbonate, sodium carbonate, and potassium carbonate. Examples of alkali earth metal carbonates include magnesium carbonate, calcium carbonate, and barium carbonate. Examples of alkali metal hydrogencarbonates include lithium hydrogencarbonate, sodium hydrogencarbonate, and potassium hydrogencarbonate. Examples of alkali metal phosphates include sodium phosphate and dibasic sodium phosphate. Examples of alkali metal acetates include sodium acetate and potassium acetate. Examples of alkali metal hydrides include sodium hydride and potassium hydride. Among them, from the standpoint of saponification efficiency and ease of the treatment, metal hydroxides, metal carbonates, metal hydrogencarbonates, metal phosphates, and ammonia are preferable, and sodium hydroxide and potassium hydroxide, which are alkali metal hydroxides, are further preferable. These basic compounds may be used singly, or two or more thereof may be used in combination.

The surfactant is not particularly limited, and examples thereof include known anionic surfactants such as a polyoxyethylene alkyl ether sulfuric ester salt, nonionic surfactants, and amphoteric surfactants. Anionic surfactants such as a polyoxyethylene alkyl ether sulfuric ester salt are suitable from the standpoint that saponification can be favorably carried out without solidifying the rubber. In the saponification treatment, the amounts of the basic compound and the surfactant to be added and the temperature and the time period for the saponification treatment may be set as appropriate.

A solidifying-drying step is a step of solidifying a purified product obtained in the modification step and then drying the solidified product to obtain a modified natural rubber. Regarding the natural rubber obtained in the solidifying-drying step, impurities on the surfaces of the natural rubber particles are removed in the previous modification step. Thus, a rubber composition containing the natural rubber is considered to have good rubber physical properties.

The method for the solidification is not particularly limited, and examples thereof include a method in which the pH is adjusted to 4 to 7 by adding an acid such as formic acid, acetic acid, and sulfuric acid, and a polymer flocculant is further added as necessary, followed by agitation. The rubber component in the modified product is aggregated by carrying out the solidification, whereby solidified rubber can be obtained.

The method for the drying is not particularly limited, and the drying can be carried out by using a normal drying machine such as a trolley type dryer, a vacuum dryer, an air dryer, and a drum dryer, which are used in a drying step in a method for producing a normal natural rubber such as TSR.

The drying is preferably carried out after the obtained solidified rubber is washed. The method for the washing is not particularly limited as long as the method is a means that allows the impurities contained in the entire rubber to be removed. Examples of the method for the washing include a method in which after the rubber component is diluted and washed with water, centrifugal separation is performed, or the diluted solution is allowed to stand to float the rubber, only the water phase is discharged, and the rubber component is taken out. In addition, when washing is further carried out after the obtained solidified rubber is treated with the basic compound, impurities trapped in the rubber at the time of solidification can be re-dissolved and washed away, so that the impurities firmly adhered to the solidified rubber can also be removed.

The modified natural rubber has a nitrogen content of not greater than 0.40% by mass. When the nitrogen content is set within such a range, the advantageous effects of the invention are exhibited. The nitrogen content is preferably not greater than 0.30% by mass, more preferably not greater than 0.20% by mass, and further preferably not greater than 0.10% by mass. The nitrogen content can be measured by a conventional method such as Kjeldahl method. The nitrogen is derived from protein. Regarding the lower limit of the nitrogen content, the nitrogen content is preferably lower. The nitrogen content is considered to be sufficiently low when the nitrogen content is, for example, 0.06% by mass or 0.01% by mass.

The phosphorus content of the modified natural rubber is preferably not greater than 200 ppm. When the phosphorus content is set within such a range, the rubber physical properties such as low fuel consumption performance tend to improve. The phosphorus content is preferably not greater than 150 ppm and more preferably not greater than 100 ppm. Here, the phosphorus content can be measured by a conventional method such as ICP emission spectrometry. The phosphorus is derived from phospholipid (phosphorus compound).

The gel content of the modified natural rubber is preferably not greater than 20% by mass. When the gel content is set within such a range, the rubber physical properties such as low fuel consumption performance tend to improve.

The gel content is more preferably not greater than 10% by mass and further preferably not greater than 7% by mass. The gel content means a value measured as matter insoluble in toluene, which is a nonpolar solvent, and is hereinafter sometimes referred to merely as "gel content" or "gel fraction". The method for measuring the gel content is as follows. First, a natural rubber sample is immersed in dehydrated toluene, and the toluene solution is shaded and left in a dark place for 1 week. Thereafter, the toluene solution is centrifuged at $1.3 \times 10^5$ rpm for 30 minutes, thereby separating insoluble gel component and toluene soluble components from each other. Methanol is added to the insoluble gel component to solidify the insoluble gel component, then drying is performed, and a gel content is obtained on the basis of the ratio of the mass of the gel component and the original mass of the sample.

The amount of the modified natural rubber contained in the rubber component is 40 to 75% by mass. If the amount of the modified natural rubber is outside of this range, the advantageous effects of the invention tend to not be sufficiently exhibited. The amount of the modified natural rubber is preferably not less than 45% by mass and more preferably not less than 50% by mass. Meanwhile, the amount of the modified natural rubber is preferably not greater than 70% by mass, more preferably not greater than 65% by mass, and further preferably not greater than 60% by mass.

(SBR)

The SBR is not particularly limited, and examples thereof include unmodified emulsion-polymerized SBR (E-SBR) and solution-polymerized SBR (S-SBR), and modified SBRs such as modified emulsion-polymerized SBR (modified E-SBR) and solution-polymerized SBR (modified S-SBR) obtained by modifying these unmodified SBRs. In addition, SBRs include an oil-extended type having flexibility adjusted by adding extender oil, and a non-oil-extended type in which no extender oil is added, and any of these types can be used.

Among these SBRs, modified SBRs are preferably used. The modified SBRs are not particularly limited as long as the modified SBRs are styrene-butadiene rubbers having a styrene content of 15 to 50% by mass, a weight-average molecular weight (Mw) of not less than 200 thousand, and an end modification ratio of 30 to 100%, and any of solution-polymerized SBR (S-SBR) and emulsion-polymerized SBR (E-SBR) can be used. In addition, SBR in which not only ends thereof but also the main chain thereof is modified, and SBR coupled by using tin, a silicon compound, or the like (a condensate, one having a branch structure, etc.) can also be used. The end modifying groups are not particularly limited as long as the groups are groups having compatibility with silica, and examples of groups to be introduced include an alkoxysilyl group, an amino group, a hydroxyl group, a glycidyl group, an amide group, a carboxyl group, an ether group, a thiol group, a cyano group, a hydrocarbon group, an isocyanate group, an imino group, an imidazole group, a urea group, a carbonyl group, an oxycarbonyl group, a sulfide group, a disulfide group, a sulfonyl group, a sulfinyl group, a thiocarbonyl group, an ammonium group, an imido group, a hydrazo group, an azo group, a diazo group, a nitrile group, a pyridyl group, an alkoxy group, an oxy group, an epoxy group, and metal atoms such as tin and titanium. These functional groups may have a substituent. Among them, primary, secondary, and tertiary amino groups (particularly, a glycidylamino group), an epoxy group, a hydroxyl group, an alkoxy group (preferably, an alkoxy group having 1 to 6 carbon atoms), an alkoxysilyl group (preferably, an alkoxysilyl group having 1 to 6 carbon atoms), and a hydrocarbon group are preferable. The modified SBRs can be produced by the method disclosed in Japanese Laid-Open Patent Publication No. 2014-19841, for example.

For the reason that sufficient grip performance and rubber strength are achieved, the styrene content of the SBR is preferably not less than 5.0% by mass and more preferably not less than 10.0% by mass. In addition, from the standpoint of low fuel consumption performance, the styrene content of the SBR is preferably not greater than 60.0% by mass and more preferably not greater than 50.0% by mass. The styrene content of the SBR in the present specification is a value calculated by $^1$H-NMR measurement.

For the reason that sufficient grip performance and rubber strength are achieved, the vinyl content (1,2-bond butadiene unit content) of the SBR is preferably not less than 10.0% and more preferably not less than 15.0%. In addition, from the standpoint of low fuel consumption performance, the vinyl content of the SBR is preferably not greater than 65.0% and more preferably not greater than 60.0%. The vinyl content of the SBR in the present specification can be measured by infrared absorption spectrometry.

The amount of the SBR contained in the rubber component is 10 to 35% by mass. If the amount of the SBR is out of this range, the advantageous effects of the invention tend to not be sufficiently exhibited. The amount of the SBR is preferably not less than 15% by mass and further preferably not less than 20% by mass. Meanwhile, the amount of the SBR is preferably not greater than 30% by mass. In the case where an oil-extended type SBR is used as the SBR, the amount of the SBR itself as the solid contents contained in the oil-extended type SBR is the amount of the SBR contained in the rubber component.

(Other Rubber Component)

Examples of another rubber component include unmodified natural rubber (NR), epoxidized natural rubber (ENR), isoprene rubber (IR), butadiene rubber (BR), styrene-isoprene rubber (SIR), styrene-isoprene-butadiene rubber (SIBR), ethylene-propylene-diene rubber (EPDM), chloroprene rubber (CR), and acrylonitrile-butadiene rubber (NBR). Among them, BR is preferably used since it has good abrasion resistance, low-temperature characteristics, and flex crack growth resistance.

As the BR, any of those used normally in this field can be suitably used. From the standpoint of achieving good abrasion resistance, high-cis BR having a cis content (cis-1,4 bond content) of not less than 90.0% is preferable. The cis content of the BR is more preferably not less than 95.0%. The cis content in the present specification is a value measured by infrared absorption spectrometry.

For the reason that interaction with a filler becomes stronger and good low fuel consumption performance is achieved, modified BR in which the ends and/or the main chain thereof is modified or modified BR coupled by using tin, a silicon compound, or the like (a condensate, one having a branch structure, etc.) can be used as the BR. From the standpoint of reaction with silica, modified BR in which the ends and/or the main chain thereof is modified with a functional group that interacts with silica, particularly, modified BR having at least one group selected from the group consisting of a silyl group, an amino group, an amide group, a hydroxyl group, and an epoxy group, can be used as the BR.

From the standpoint of abrasion resistance, the amount of the BR contained in the rubber component in the case where the rubber component contains the BR only needs to be greater than 0% by mass, is preferably not less than 3% by mass, and is more preferably not less than 5% by mass. In addition, from the standpoint of wet grip performance, the amount of the BR contained in the rubber component is preferably not greater than 45% by mass, more preferably not greater than 40% by mass, even more preferably not greater than 35% by mass, and further preferably not greater than 30% by mass.

<Filler>

As a filler, predetermined carbon black is used, but another filler may be further used. As such a filler, any of fillers that are generally used in this field, such as silica, calcium carbonate, and clay, can be used. In the case where a filler other than carbon black is used, such a filler is preferably silica.

(Carbon Black)

The carbon black is one having a cetyltrimethylammonium bromide adsorption specific surface area (CTAB) of not less than 120 $m^2/g$. As such carbon black, one type can be used, or two or more types can be used in combination. If the CTAB of the carbon black is less than 120 $m^2/g$, a reinforcing effect on the rubber is not sufficient, and thus there is a possibility that the advantageous effects of the invention will not be sufficiently exhibited. The CTAB is preferably not less than 125 $m^2/g$ and more preferably not less than 130 $m^2/g$. Meanwhile, the upper limit of the CTAB of the carbon black is not particularly limited, but, from the standpoint of low heat generation property, the CTAB is not greater than 165 $m^2/g$, preferably not greater than 162 $m^2/g$, and more preferably not greater than 160 $m^2/g$. Here, the CTAB is a value that correlates with the magnitude of the particle diameter of the carbon black, and a larger CTAB adsorption specific surface area indicates that the particle diameter of the carbon black is smaller. The CTAB can be measured according to JIS K 6217-3: 2001.

From the standpoint of a reinforcing effect on the rubber and low heat generation property, the nitrogen adsorption specific surface area ($N_2SA$) of the carbon black is preferably 125 $m^2/g$ to 180 $m^2/g$. The $N_2SA$ is more preferably not less than 130 $m^2/g$. In addition, the $N_2SA$ is more preferably not greater than 170 $m^2/g$. The $N_2SA$ of the carbon black is obtained by the A method of JIS K 6217.

The carbon black is obtained by a normal method for producing carbon black. For example, in a method such as the furnace method, desired carbon black can be produced by adjusting factors such as the amounts of materials to be introduced, the amount of air to be introduced for combustion, the oxygen content of the air for combustion, a reaction temperature, and a reaction time period, as appropriate. In addition, a commercially available one can also be used.

The amount of the carbon black per 100 parts by mass of the rubber component is 20 to 60 parts by mass. When the amount of the carbon black falls within such a range, a sufficient reinforcing effect and low fuel consumption performance tend to be achieved. The amount of the carbon black is preferably not less than 25 parts by mass, more preferably not less than 30 parts by mass, further preferably not less than 35 parts by mass, and even further preferably not less than 40 parts by mass. Meanwhile, the amount of the carbon black is preferably not greater than 58 parts by mass and more preferably not greater than 55 parts by mass.

(Silica)

In the case where silica is contained, the type of silica is not particularly limited, and examples of the silica include dry-process silica (silicic anhydride) and wet-process silica (hydrous silicic acid), and wet-process silica is preferable for the reason that it has a higher silanol group content.

The nitrogen adsorption specific surface area ($N_2SA$) of silica used in an embodiment of the present invention is 100 to 300 $m^2/g$ and preferably 130 to 280 $m^2/g$ from the standpoint of a reinforcing effect and dispersibility.

The amount of the silica per 100 parts by mass of the rubber component is preferably greater than 0 parts by mass and not greater than 90 parts by mass from the standpoint of low heat generation property and processability. The amount of the silica is more preferably not less than 5 parts by mass and further preferably not less than 10 parts by mass. Meanwhile, the amount of the silica is more preferably not greater than 80 parts by mass, even more preferably not greater than 70 parts by mass, further preferably not greater than 60 parts by mass, even further preferably not greater than 50 parts by mass, and much further preferably not greater than 40 parts by mass.

(Amount of Filler)

The amount of the entire filler including the silica, per 100 parts by mass of the rubber component, is preferably 20 to 150 parts by mass. When the amount of the entire filler is set within the above range, the advantageous effects of the invention tend to be sufficiently exhibited. The amount of the filler is preferably not less than 30 parts by mass, more preferably not less than 40 parts by mass, even more preferably not less than 50 parts by mass, and further preferably not less than 60 parts by mass. Meanwhile, the amount of the filler is preferably not greater than 120 parts by mass, more preferably not greater than 100 parts by mass, and further preferably not greater than 90 parts by mass.

<Silane Coupling Agent>

As a silane coupling agent that can be used in an embodiment of the present invention, any silane coupling agent that is conventionally used in combination with silica can be used. For example, silane coupling agents such as sulfide silane coupling agents, mercapto silane coupling agents, vinyl silane coupling agents, amino silane coupling agents, glycidoxy silane coupling agents, nitro silane coupling agents, and chloro silane coupling agents can be used.

Specific examples of sulfide silane coupling agents include bis(3-triethoxysilylpropyl)tetrasulfide, bis(2-triethoxysilylethyl)tetrasulfide, bis(3-trimethoxysilylpropyl)tetrasulfide, bis(2-trimethoxysilylethyl)tetrasulfide, bis(3-triethoxysilylpropyl)trisulfide, bis(3-trimethoxysilylpropyl)trisulfide, bis(3-triethoxysilylpropyl)disulfide, bis(3-trimethoxysilylpropyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, and 3-trimethoxysilylpropyl methacrylate monosulfide.

Examples of mercapto silane coupling agents include 3-mercaptopropyltrimethoxysilane, 3-mercaptopropyltriethoxysilane, 2-mercaptoethyltrimethoxysilane, and 2-mercaptoethyltriethoxysilane.

Examples of vinyl silane coupling agents include vinyltriethoxysilane and vinyltrimethoxysilane.

Examples of amino silane coupling agents include 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane.

Examples of glycidoxy silane coupling agents include γ-glycidoxypropyltriethoxysilane, γ-glycidoxypropyltrimethoxysilane, γ-glycidoxypropylmethyldiethoxysilane, and γ-glycidoxypropylmethyldimethoxysilane.

Examples of nitro silane coupling agents include 3-nitropropyltrimethoxysilane and 3-nitropropyltriethoxysilane.

Examples of chloro silane coupling agents include 3-chloropropyltrimethoxysilane, 3-chloropropyltriethoxysilane, 2-chloroethyltrimethoxysilane, and 2-chloroethyltriethoxysilane.

Among these silane coupling agents, bis(3-triethoxysilylpropyl)tetrasulfide, 3-mercaptopropyltrimethoxysilane are suitably used in view of achievement of both desired cost and a desired effect due to addition of the coupling agent. One of these silane coupling agents may be used, or two or more of these silane coupling agents may be used in combination.

The amount of the silane coupling agent per 100 parts by mass of the silica is preferably 0 to 20 parts by mass. When the blending amount of the silane coupling agent is not greater than 20 parts by mass, a coupling effect corresponding to the cost tends to be exhibited. In addition, from the standpoint of a dispersion effect and a coupling effect, the amount of the silane coupling agent is preferably 0.5 to 15 parts by mass and further preferably 1 to 15 parts by mass.

<Vulcanizing Agent>

A compound represented by the following formula (A) is used as a vulcanizing agent. As such a vulcanizing agent, one type or two or more types can be used. When the vulcanizing agent is used, the rubber composition can have C-C bonds having high bond energy and high thermal stability. Thus, abrasion resistance and mechanical strength can be improved while favorable low fuel consumption performance is maintained, so that the advantageous effects of the invention can be exhibited. As the vulcanizing agent, in addition to the compound represented by the following formula (A), sulfur can also be contained.

$$R^1\text{-S-S-Y-S-S-}R^2 \qquad (A)$$

(wherein Y represents an alkylene group having 2 to 10 carbon atoms, $R^1$ and $R^2$ are the same or different from each other and each represent a monovalent organic group containing a nitrogen atom.)

The alkylene group (the number of carbon atoms is 2 to 10) that is Y is not particularly limited, and examples thereof include linear, branched, and cyclic alkylene groups. Among them, linear alkylene groups are preferable. The number of carbon atoms is preferably 4 to 8. If the number of carbon atoms of the alkylene group is 1, thermal stability is poor, and an effect due to the presence of the alkylene group tends to not be achieved. If the number of carbon atoms is equal to or greater than 11, formation of a crosslinked chain represented by -S-S-Y-S-S- tends to be difficult.

Examples of the alkylene group that satisfies the above conditions include an ethylene group, a trimethylene group, a tetramethylene group, a pentamethylene group, a hexamethylene group, a heptamethylene group, an octamethylene group, and a decamethylene group. Among them, a hexamethylene group is preferable for the reason that a crosslinked chain represented by -S-S-Y-S-S- is smoothly formed between polymers to achieve thermal stability.

$R^1$ and $R^2$ are not particularly limited as long as $R^1$ and $R^2$ are each a monovalent organic group containing a nitrogen atom, but a monovalent organic group containing at least one aromatic ring is preferable, and a monovalent organic group containing a binding group represented by N-C(=S)- in which a carbon atom is bound to a dithio group is more preferable. In addition, each of $R^1$ and $R^2$ may be linear, branched, or cyclic, but is preferably branched.

$R^1$ and $R^2$ may be the same or different from each other, but are preferably the same for the reasons such as ease of production.

Examples of the compound that satisfies the above conditions include 1,2-bis(N,N'-dibenzylthiocarbamoyldithio)ethane, 1,3-bis(N,N'-dibenzylthiocarbamoyldithio)propane, 1,4-bis(N,N'-dibenzylthiocarbamoyldithio)butane, 1,5-bis(N,N'-dibenzylthiocarbamoyldithio)pentane, 1,6-bis(N,N'-dibenzylthiocarbamoyldithio)hexane, 1,7-bis(N,N'-dibenzylthiocarbamoyldithio)heptane, 1,8-bis(N,N'-dibenzylthiocarbamoyldithio)octane, 1,9-bis(N,N'-dibenzylthiocarbamoyldithio)nonane, and 1,10-bis(N,N'-dibenzylthiocarbamoyldithio)decane. Among them, 1,6-bis(N,N'-dibenzylthiocarbamoyldithio)hexane is preferable for the reasons that it is thermally stable and has good polarizability.

The amount of the compound represented by formula (A), per 100 parts by mass of the entire rubber component, is 0.5 to 3.0 parts by mass. When the amount of the compound falls within such a range, the advantageous effects of the invention tend to be exhibited. The amount of the compound represented by formula (A) is preferably not less than 0.7 parts by mass and more preferably not less than 1.0 part by mass. Meanwhile, the amount of the compound represented by formula (A) is preferably not greater than 2.5 parts by mass and more preferably not greater than 2.0 parts by mass.

In the case where sulfur is further contained as the vulcanizing agent, the amount of the sulfur is greater than 0 parts by mass and not greater than 2 parts by mass. The reason why the amount of the sulfur is limited is not to diminish the effect achieved by containing the compound represented by formula (A). The amount of the sulfur is preferably not less than 0.1 parts by mass, more preferably not less than 0.2 parts by mass, further preferably not less than 0.3 parts by mass, and even further preferably not less than 0.4 parts by mass. Meanwhile, the amount of the sulfur is preferably not greater than 1.5 parts by mass and more preferably not greater than 1.0 part by mass.

<Other Blending Components>

In addition to the above components, the rubber composition may contain blending ingredients that are conventionally used in the rubber industry, for example, a plasticizer or oil, zinc oxide, stearic acid, an antioxidant, and a vulcanization accelerator.

Examples of the vulcanization accelerator include guanidine compounds, aldehyde-amine compounds, aldehyde-ammonia compounds, thiazole compounds, sulfenamide compounds, thiourea compounds, thiuram compounds, dithiocarbamate compounds, and xanthate compounds. These vulcanization accelerators may be used singly, or two or more thereof may be used in combination. In the case where the vulcanization accelerator is contained, the amount of the vulcanization accelerator per 100 parts by mass of the rubber component is preferably not less than 0.3 parts by mass and more preferably not less than 0.5 parts by mass. In addition, the amount of the vulcanization accelerator is preferably not greater than 2.0 parts by mass and more preferably not greater than 1.5 parts by mass. When the amount of the vulcanization accelerator is within the above range, a suitable crosslink density tends to be achieved.

In the case where the plasticizer is contained, the amount of the plasticizer per 100 parts by mass of the rubber component is not less than 1 part by mass and preferably not less than 3 parts by mass from the standpoint of processability. In addition, the amount of the plasticizer is not greater than 40 parts by mass and preferably not greater than 20 parts by mass from the standpoint of abrasion resistance and steering stability. The amount of the plasticizer in the present specification includes the amount of oil contained in oil-extended rubber or insoluble sulfur.

Examples of the oil include process oils, vegetable fats and oils, and animal fats and oils. In the case where the oil is contained, the amount of the oil per 100 parts by mass of the rubber component is preferably not less than 2 parts by mass and more preferably not less than 5 parts by mass from the standpoint of processability. In addition, the amount of the oil is preferably not greater than 40 parts by mass from the standpoint of a load in a process.

<Production of Rubber Composition>

A known method can be used as the method for producing the rubber composition, and the rubber composition can be produced by, for example, a method in which components other than the sulfur and the vulcanization accelerator, among the above components, are kneaded with a Banbury mixer, a kneader, or an open roll, the sulfur and the vulcanization accelerator are next added to the obtained kneaded product and kneaded, and the kneaded product is vulcanized.

<Tire Tread>

The rubber composition has good abrasion resistance and chip-cut resistance and further has good rubber physical properties such as low fuel consumption performance, and thus is preferably used for tire members, particularly for tire treads.

<Tire>

A predetermined tire that is an embodiment of the present invention can be produced by a normal method using the rubber composition. Specifically, the predetermined tire can be produced by extruding the rubber composition into the shape of a tread in an unvulcanized state, attaching the extruded rubber composition together with other tire members on a tire forming machine, forming these members by a normal method to form an unvulcanized tire, and heating and pressurizing the unvulcanized tire in a vulcanizing machine.

The tire can be used as a tire for any vehicle, but, in particular, is suitably used as a tire for heavy-load vehicles such as trucks and buses.

EXAMPLES

The present invention will be specifically described by means of examples, but the present invention is not limited to these examples.

Various chemicals used in examples and comparative examples are collectively described below.

Natural rubber (NR): TSR20
Modified natural rubber (modified NR): one produced in Production Example 1 described below.
Styrene-butadiene rubber (SBR): one produced in Production Example 2 described below.
Butadiene rubber (BR): high-cis butadiene rubber (cis content: 97%, Mw: 610 thousand)
Carbon black (CB) 1: N220 manufactured by Cabot Japan K.K. (CTAB: 110 $m^2$/g, $N_2$SA: 114 $m^2$/g)
Carbon black (CB) 2: carbon black (CTAB: 159 $m^2$/g, $N_2$SA: 181 $m^2$/g)
Silica: Ultrasil VN3 manufactured by Evonik Degussa GmbH ($N_2$SA: 175 $m^2$/g)
Silane coupling agent (coupling agent): Si266 manufactured by Evonik Degussa GmbH (bis(3-triethoxysilylpropyl)disulfide)
Zinc oxide: two types of zine oxide manufactured by Mitsui Mining & Smelting Co., Ltd.
Stearic acid: bead stearic acid manufactured by NOF Corporation
Antioxidant: Nocrac 6C manufactured by Ouchi Shinko Chemical Industrial Co., Ltd.
Vulcanizing agent 1: Sulfur (powder sulfur manufactured by Tsurumi Chemical Industry Co., Ltd.)
Vulcanizing agent 2: Vulcuren VP KA9188 manufactured by LANXESS (1,6-bis(N,N'-dibenzylthiocarbamoyldithio)hexane)
Vulcanization accelerator: Nocceler NS manufactured by Ouchi Shinko Chemical Industrial Co., Ltd.

Production Example 1 (Production of Modified NR)

The dry rubber content (DRC) of a natural rubber latex (field latex acquired from Taitex. Co., Ltd.) was adjusted to 30% (w/v), then 10 g of Emal-E and 20 g of NaOH were added to 1000 g of the natural rubber latex, and the mixture was subjected to a saponification reaction at room temperature for 48 hours to obtain a saponified natural rubber latex. Water was added to the latex to dilute the latex such that the DRC was 15% (w/v). Then, formic acid was added thereto with slow agitation to adjust the pH to 4.0 to 4.5, so that the latex was aggregated. The aggregated rubber was pulverized, washed with 1000 mL of water twice, and then dried at 110°C for 2 hours to obtain a solid rubber (modified NR).

The nitrogen contents, the phosphorus contents, and the gel contents of the above natural rubber and the solid rubber (modified NR) obtained by Production Example 1 were measured by methods described below. The results are shown in Table 1.

(Measurement of Nitrogen Content)

The nitrogen content was measured by using CHN CORDER MT-5 (manufactured by Anatec Yanaco Corporation). For the measurement, first, a calibration curve for obtaining a nitrogen content was created using antipyrine as a standard material. Next, about 10 mg of TSR or the modified natural rubber obtained in Production Example 1 was weighed as a sample, and an average value was obtained from the results of three measurements and used as the nitrogen content of the sample.

(Measurement of Phosphorus Content)

The phosphorus content was obtained by using an ICP emission analyzer (ICPS-8100, manufactured by Shimadzu Corporation). In addition, an NMR analyzer (400MHz, AV400M, manufactured by Bruker Japan K.K.) was used for 31P-NMR measurement of phosphorus, a measurement peak of a phosphorus atom of an 80% phosphoric acid aqueous solution was set as a reference point (0 ppm), and a component extracted from raw rubber was refined with chloroform, dissolved in CDC13, and subjected to the measurement.

(Measurement of Gel Content)

70.00 mg of raw rubber cut into 1 mm × 1 mm was weighed as a sample, 35 mL of toluene was added thereto, and the mixture was allowed to stand in a cool and dark place for 1 week. Next, the mixture was subjected to centrifugal separation to precipitate the gel component that was insoluble in toluene, soluble components in the supernatant were removed, only the gel component was solidified with methanol and then dried, and the mass of the dried gel component was measured. A gel content (% by mass) was obtained by the following equation.

$$\text{Gel content (\% by mass)} = [\text{mass (mg) after drying} / \text{initial sample mass (mg)}] \times 100$$

[Table 1]

|  | Modified natural rubber (Production Example 1) | Natural rubber (one described above) |
|---|---|---|
| Nitrogen content (% by mass) | 0.36 | 3.80 |
| Phosphorus content (ppm) | 88 | 590 |
| Gel content (% by mass) | 7 | 29.8 |

Production Example 2 (Production of SBR)

A stainless steel polymerization reactor having an inner volume of 30 L and equipped with an agitation device was washed and dried, and the gas in the polymerization reactor was replaced with dry nitrogen. Next, 15.3 kg of industrial hexane (density: 680 kg/m$^3$), 912 g of 1,3-butadiene, 288 g of styrene, 9.1 mL of tetrahydrofuran, and 6.4 mL of ethylene glycol diethyl ether were put into the polymerization reactor. Next, in order to detoxify impurities acting to inactivate a polymerization initiator in advance, a small amount of a hexane solution of n-1 butyllithium was put as a scavenger into the polymerization reactor. An n-hexane solution of n-butyllithium (amount of n-butyllithium: 19.2 mmol) was put into the polymerization reactor to initiate a polymerization reaction. The polymerization reaction was carried out for 3 hours. During the polymerization reaction, the temperature in the polymerization reactor was adjusted to 65°C, the solution in the polymerization reactor was agitated at an agitation speed of 130 rpm, and 1368 g of 1,3-butadiene and 432 g of styrene were continuously supplied into the polymerization reactor. 20 mL of a THF solution containing 19.2 mmol of 2-[1-(2-hydroxy-3,5-di-t-pentylphenyl)ethyl]-4,6-di-t-pentylphenyl acrylate was put into the polymerization reactor, and the polymer solution was agitated for 15 minutes. Next, 20 mL of a hexane solution containing 1.2 mL of methanol was put into the polymerization reactor, and the polymer solution was agitated for 5 minutes. 12.0 g of 2-tert-butyl-6-(3-tert-butyl-2-hydroxy-5-methylbenzyl)-4-methylphenyl acrylate (SUMILIZER GM manufactured by Sumitomo Chemical Co., Ltd.) and 6.0 g of pentaerythrityl tetrakis (3-laurylthio propionate) (SUMILIZER TP-D manufactured by Sumitomo Chemical Co., Ltd.) were put into the polymerization reactor, and the polymer solution was then evaporated at ordinary temperature for 24 hours, and further dried under reduced pressure at 55°C for 12 hours to obtain a polymer, modified SBR.

Examples 1 to 6 and Comparative Examples 1 to 4

According to the blending contents indicated in Table 2, chemicals other than the sulfur and the vulcanization accelerator, among the blending materials, were kneaded with a 1.7-L Banbury mixer for 5 minutes until reaching a discharge temperature of 150°C, to obtain a kneaded product. Next, the sulfur and the vulcanization accelerator were added to the obtained kneaded product, and the mixture was kneaded with a twin-screw open roll for 5 minutes until reaching 80°C, to obtain an unvulcanized rubber composition.

<Vulcanized Rubber Sheet>

A vulcanized rubber sheet was produced by vulcanizing the obtained unvulcanized rubber composition at 170°C for 10 minutes.

<Test Tire>

Test tires (tire size: 195/65R15, tires for passenger car) were produced by extruding the obtained unvulcanized rubber composition into the shape of a tread, attaching the extruded unvulcanized rubber composition together with other tire members on a tire forming machine, and performing vulcanization at 170°C for 10 minutes.

<Low Heat Generation Property (Viscoelasticity Test)>

The loss tangent tanδ of the above vulcanized rubber sheet was measured with a viscoelasticity spectrometer, manufactured by Iwamoto Corporation, under the conditions of: a frequency of 10 Hz; an initial strain of 10%; and a dynamic strain of 2% at 30°C. The loss tangent tanδ is indicated as an index by the following calculation equation with the measurement result of Comparative Example 1 being 100. A higher low heat generation property index indicates better rolling resistance characteristics. In the present specification, if the low heat generation property index is not less than 100, it can be considered that the low heat generation property does not deteriorate and is sufficiently maintained.

$$\text{(Low heat generation property index)} = \text{(tan}\delta \text{ (30°C) of Comparative Example 1)} / \text{(tan}\delta \text{ (30°C) of each blending formula)} \times 100$$

<Chip-Cut Resistance>

According to JIS K 6251, "Rubber, vulcanized or thermoplastics-Determination of tensile stress-strain properties", a tensile test was carried out on a rubber test piece sampled from the tread of the above test tire, and elongation at break EB (%) was measured. The EB of each blending formula is indicated as an index by the following calculation equation with the elongation at break of Comparative Example 1 being 100. A higher value indicates that the rubber strength is higher and the chip-cut resistance is better.

$$\text{(Chip-cut resistance)} = \text{(EB of each blending formula)} / \text{(EB of Comparative Example 1)} \times 100$$

<Abrasion resistance>

For the above vulcanized rubber sheet, an amount of abrasion was measured by using a Lambourn abrasion tester at room temperature under a load of 1.0 kgf at a slip rate of 30%. The amount of abrasion is indicated as an index with the measurement result of Comparative Example 1 being 100. A higher abrasion resistance index indicates better abrasion resistance.

$$\text{(Abrasion resistance index)} = \text{(amount of abrasion of Comparative Example 1)} / $$

$$\text{(amount of abrasion of each blending formula)} \times 100$$

<Running Performance and durability (evaluation with real vehicle)>

The above test tires were mounted to rims (rim size: 18×8J), inflated to an internal pressure of 230 kPa, and attached to the four wheels of a vehicle (Land Cruiser 200). Then, the vehicle was caused to run on a 0.3-km off-road course three times, running performance and durability were each evaluated as an index through sensory evaluation by the driver with the result of Comparative Example 1 being 100, and the average thereof was obtained. A higher index indicates better overall evaluation of running performance and durability.

[Table 2]

| | | Comparative Example | | | | Example | | | | | |
|---|---|---|---|---|---|---|---|---|---|---|---|
| | | 1 | 2 | 3 | 4 | 1 | 2 | 3 | 4 | 5 | 6 |
| Blending amount (parts by mass) | NR | 55 | - | 55 | 55 | - | - | - | - | - | - |
| | Modified NR | - | 55 | - | - | 55 | 40 | 75 | 55 | 55 | 55 |
| | SBR | 25 | 25 | 25 | 25 | 25 | 35 | 10 | 25 | 25 | 25 |
| | BR | 20 | 20 | 20 | 20 | 20 | 25 | 15 | 20 | 20 | 20 |
| | CB1 | 50 | 50 | - | 50 | - | - | - | - | - | 25 |
| | CB2 | - | - | 50 | - | 50 | 50 | 50 | 50 | 50 | 25 |
| | Silica | 25 | 25 | 25 | 25 | 25 | 25 | 25 | 25 | 25 | 25 |
| | Coupling agent | 1.5 | 1.5 | 1.5 | 1.5 | 1.5 | 1.5 | 1.5 | 1.5 | 1.5 | 1.5 |
| | Zinc oxide | 2 | 2 | 2 | 2 | 2 | 2 | 2 | 2 | 2 | 2 |
| | Stearic acid | 2.5 | 2.5 | 2.5 | 2.5 | 2.5 | 2.5 | 2.5 | 2.5 | 2.5 | 2.5 |
| | Antioxidant | 2 | 2 | 2 | 2 | 2 | 2 | 2 | 2 | 2 | 2 |
| | Vulcanizing agent 1 (sulfur) | 1.4 | 1.4 | 1.4 | 0.5 | 0.5 | 0.5 | 0.5 | 1.0 | 0.2 | 0.5 |
| | Vulcanizing agent 2 (KA9188) | - | - | - | 1.5 | 1.5 | 1.5 | 1.5 | 0.5 | 3.0 | 1.5 |
| | Vulcanization accelerator | 1.2 | 1.2 | 1.2 | 1.2 | 1.2 | 1.2 | 1.2 | 1.2 | 1.2 | 1.2 |
| Evaluation | Low heat generation property (tanδ at 30°C) | 100 | 110 | 80 | 100 | 100 | 105 | 115 | 100 | 105 | 110 |
| | Chip-cut resistance (high-speed EB) | 100 | 105 | 105 | 105 | 115 | 120 | 125 | 115 | 120 | 110 |
| | Abrasion resistance (LAT) | 100 | 110 | 105 | 110 | 130 | 135 | 140 | 120 | 125 | 125 |
| | Evaluation with real vehicle (running performance, durability) | 100 | 105 | 90 | 105 | 100 | 110 | 120 | 115 | 115 | 110 |

According to the present invention, a tire tread having good abrasion resistance and chip-cut resistance and a tire including the tire tread can be provided.

Provided is a tire tread having good abrasion resistance and chip-cut resistance and a tire including the tire tread. The tire tread is formed from a rubber composition containing: 100 parts by mass of a rubber component containing 40 to 75% by mass of a modified natural rubber having a nitrogen content of not greater than 0.40% by mass and 10 to 35% by mass of a styrene-butadiene rubber; 20 to 60 parts by mass of carbon black having a cetyltrimethylammonium bromide adsorption specific surface area (CTAB) of not less than 120 m$^2$/g; and 0.5 to 3 parts by mass of a compound represented by formula (A).

**Claims**

1.  A tire tread formed from a rubber composition containing:

    100 parts by mass of a rubber component containing 40 to 75% by mass of a modified natural rubber having a nitrogen content of not greater than 0.40% by mass and 10 to 35% by mass of a styrene-butadiene rubber;
    20 to 60 parts by mass of carbon black having a cetyltrimethylammonium bromide adsorption specific surface area (CTAB) of not less than 120 m$^2$/g; and
    0.5 to 3.0 parts by mass of a compound represented by the following formula (A),

    $$R^1\text{-S-S-Y-S-S-}R^2 \qquad (A),$$

    wherein Y represents an alkylene group having 2 to 10 carbon atoms, $R^1$ and $R^2$ are the same or different from each other and each represent a monovalent organic group containing a nitrogen atom.

2.  The tire tread according to claim 1, wherein the rubber composition further contains not greater than 2.0 parts by mass of sulfur.

3.  The tire tread according to claim 1 or 2, wherein the rubber component further contains greater than 0% by mass and not greater than 45% by mass of a butadiene rubber.

4.  The tire tread according to any one of claims 1 to 3, wherein the rubber composition further contains silica.

5.  The tire tread according to claim 4, wherein the rubber composition further contains a silane coupling agent.

6.  The tire tread according to any one of claims 1 to 5, wherein the modified natural rubber is obtained by subjecting a natural rubber to saponification treatment.

7.  A tire comprising the tire tread according to any one of claims 1 to 6.

**Patentansprüche**

1.  Reifenlauffläche hergestellt aus einer Kautschukzusammensetzung enthaltend:

    100 Masse-Teile einer Kautschuk-Komponente enthaltend 40-75 Masse-% eines modifizierten Naturkautschuks aufweisend einen Stickstoffgehalt von nicht größer als 0,40 Masse-% und 10-35 Masse-% eines Styrol-Butadien-Kautschuks;
    20-60 Masse-Teile an Ruß aufweisend eine spezifische Oberfläche für die Absorption von Cetyltrimethylammoniumbromid (CTAB) von nicht weniger als 120 m$^2$/g; und
    0,5 bis 3,0 Masse-Teile einer durch die folgende Formel (A) dargestellten Verbindung $R^1\text{-S-S-Y-S-S-}R^2$ (A),

    wobei Y eine Alkylen-Gruppe mit 2 bis 10 Kohlenstoffatomen darstellt, $R^1$ und $R^2$ gleich oder verschieden voneinander sind und jeweils eine ein Stickstoffatom enthaltende einwertige organische Gruppe darstellen.

2.  Reifenlauffläche nach Anspruch 1, wobei die Kautschukzusammensetzung ferner nicht mehr als 2,0 Masse-Teile an Schwefel enthält.

**3.** Reifenlauffläche nach Anspruch 1 oder 2, wobei die Kautschuk-Komponente ferner mehr als 0 Masse-% und nicht mehr als 45 Masse-% eines Butadien-Kautschuks enthält.

**4.** Reifenlauffläche nach einem der Ansprüche 1 bis 3, wobei die Kautschukzusammensetzung ferner Silica enthält.

**5.** Reifenlauffläche nach Anspruch 4, wobei die Kautschukzusammensetzung ferner ein Silan-Kupplungsmittel enthält.

**6.** Reifenlauffläche nach einem der Ansprüche 1 bis 5, wobei der modifizierte Naturkautschuk erhalten wird, indem ein Naturkautschuk einer Verseifungbehandlung unterzogen wird.

**7.** Reifen umfassend die Reifenlauffläche nach einem der Ansprüche 1 bis 6.

**Revendications**

**1.** Bande de roulement formée à partir d'une composition de caoutchouc contenant :

100 parties en masse d'un composant caoutchouc contenant 40 à 75 % en masse d'un caoutchouc naturel modifié ayant une teneur en azote non supérieure à 0,40 % en masse et 10 à 35 % en masse d'un caoutchouc de styrène-butadiène ;
20 à 60 parties en masse d'un noir de carbone ayant une surface spécifique d'adsorption de bromure de cétyltriméthylammonium (CTAB) non inférieure à 120 $m^2$/g ; et
0,5 à 3,0 parties en masse d'un composé représenté par la formule (A) qui suit,

$$R^1\text{-S-S-Y-S-S-R}^2 \qquad (A)$$

dans laquelle Y représente un groupe alkylène ayant 2 à 10 atomes de carbone, $R^1$ et $R^2$ sont identiques ou différents et représentent chacun un groupe organique monovalent contenant un atome d'azote.

**2.** Bande de roulement selon la revendication 1, dans laquelle la composition de caoutchouc contient en outre au plus 2,0 parties en masse de soufre.

**3.** Bande de roulement selon la revendication 1 ou 2, dans laquelle le composant caoutchouc contient en outre plus de 0 % en masse et au plus 45 % en masse d'un caoutchouc de butadiène.

**4.** Bande de roulement selon l'une quelconque des revendications 1 à 3, dans laquelle la composition de caoutchouc contient en outre de la silice.

**5.** Bande de roulement selon la revendication 4, dans laquelle la composition de caoutchouc contient en outre un agent de couplage au silane.

**6.** Bande de roulement selon l'une quelconque des revendications 1 à 5, dans laquelle le caoutchouc naturel modifié est obtenu par soumission d'un caoutchouc naturel à un traitement de saponification.

**7.** Pneu comprenant la bande de roulement de l'une quelconque des revendications 1 à 6.

**EP 3 401 121 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000344955 A
- JP 2010138359 A
- JP 2010174169 A
- JP 2014019841 A